# EUROPÄISCHE PATENTANMELDUNG

(11) **EP 4 201 187 A1**
(43) Veröffentlichungstag der Anmeldung: **28.06.2023**
(21) Anmeldenummer: 21217581.4
(22) Anmeldetag: 23.12.2021
(51) Int. Cl.: A01D 34/63, A01D 34/67, A01D 34/68, A01D 34/81, A01D 34/82

(54) **TRAGBARES ARBEITSGERÄT**

(71) Anmelder: Andreas Stihl AG & Co. KG, 71336 Waiblingen (DE)
(72) Erfinder: HEFTI, Jonas, 70176 Stuttgart (DE); PAHLITZSCH, Henrik, 80336 München (DE); KALTENBERG, Marcel, 52064 Aachen (DE); QUECK, Dirk, 67435 Neustadt (DE); WINTER, Mathias, 04315 Leipzig (DE); STRODA, Robin, 31552 Apelen (DE); NAGL, Matthias, 13125 Berlin (DE); KRAFT, Alexander, 06118 Halle (DE); BARTH, Simon, 29410 Salzwedel (DE)
(74) Vertreter: Zurhorst, Stefan

(57) **Zusammenfassung**

Die Erfindung betrifft ein tragbares Arbeitsgerät. Das Arbeitsgerät umfasst einen an dem vorderen Gehäuse (35) angeordneten Abstandhalter (10) mit einem Kontaktbereich (11). Der Kontaktbereich (11) weist einen radial zur Drehachse (7) der Abtriebswelle (3) gemessenen maximalen Abstand (a) aufweist, der in einem ersten, unverformten Zustand (12) des Abstandhalters (10) größer als der Schnittradius (r) des Schneidwerkzeuges (6) ist. Der Abstandhalter (10) ist elastisch verformbar. Der Abstandhalter (10) ist in einem zweiten Zustand (13) derart elastisch verformt, dass der maximale Abstand (a) des Kontaktbereiches (11) höchstens so groß ist wie der Schnittradius (r) und der Abstandhalter (10) vollständig außerhalb der Schnittebene (40) des Schneidwerkzeuges (6) angeordnet ist.

## Beschreibung

Die Erfindung betrifft ein tragbares Arbeitsgerät nach dem Oberbegriff des Anspruchs 1.

Tragbare Arbeitsgeräte wie Rasentrimmer, Motorsensen, Freischneider dienen zum Mähen von Gras respektive Gestrüpp oder Ähnlichem. Hierzu wird ein Mähkopf mit einem Werkzeug um eine Drehachse drehend angetrieben, wodurch das Schnittgut bei Kontakt mit dem Werkzeug geschnitten wird. Als Werkzeuge können neben Schneidfäden auch Schneidmesser, Schneidblätter, Sägeblätter oder ähnliches eingesetzt werden. Um das Mähen um Hindernisse zu erleichtern, kann an dem Arbeitsgerät ein Abstandhalter vorgesehen sein. Bekannte Abstandhalter sind derart ausgelegt, dass diese bei Kontakt mit einem Hindernis, beispielsweise einem Randstein, einen Abstand zwischen Mähkopf und Hindernis gewährleisten, so dass das Hindernis nicht von dem Schneidwerkzeug kontaktiert werden kann.

Durch derartige Abstandhalter wird ein Sicherheitsabstand zwischen Hindernis und Schneidwerkzeug eingehalten, wodurch weder das Schneidwerkzeug noch das Hindernis Schaden nehmen. Nachteilig ist jedoch, dass der Bereich, über den sich der Sicherheitsabstand erstreckt, für das Schneidwerkzeug nicht zugänglich ist und somit auch nicht gemäht werden kann. Der Verbleib unbearbeiteten Schnittgutes sollte jedoch gerade durch den Einsatz der oben genannten Arbeitsgeräte vermieden werden. Insbesondere bei Werkzeugen, die einem erhöhten Verschleiß unterliegen, beispielsweise Schneidfäden, erhöht sich mit zunehmender Abnutzung des Schneidfadens auch der Bereich, der vom Schneidwerkzeug nicht gemäht werden kann. Nachteilig ist, dass der Benutzer häufig den Schneidfaden nachstellen muss, um den für das Schneidwerkzeug nicht zugänglichen Bereich zu minimieren.

Der Erfindung liegt die Aufgabe zugrunde, ein gattungsgemäßes tragbares Arbeitsgerät derart weiterzuentwickeln, so dass neben einer hohen Zugänglichkeit auch ausreichender Schutz für das Schneidwerkzeug gegeben ist.

Die Aufgabe wird durch ein tragbares Arbeitsgerät mit den Merkmalen des Anspruchs 1 gelöst.

Das erfindungsgemäße tragbare Arbeitsgerät umfasst ein vorderes Gehäuse, eine aus dem vorderen Gehäuse ragende Abtriebswelle und einen mit der Abtriebswelle verbundenen Grundkörper. Ferner umfasst das tragbare Arbeitsgerät ein Schneidwerkzeug, das an dem Grundkörper angeordnet ist. Der Grundkörper ist mit dem Schneidwerkzeug über einen Antriebsmotor um eine Drehachse der Abtriebswelle drehend antreibbar. Das Schneidwerkzeug weist in einer Schnittebene um die Drehachse rotierend einen Schnittkreis mit einem Schnittadius auf. Die Schnittebene ist durch das rotierende Schneidwerkzeug aufgespannt. Ferner umfasst das tragbare Arbeitsgerät einen an dem Gehäuse angeordneten Abstandhalter mit einem Kontaktbereich. Der Kontaktbereich weist einen radial zur Drehachse der Abtriebswelle gemessenen maximalen Abstand auf, der in einem ersten, unverformten Zustand des Abstandhalters größer als der Schnittradius des Schneidwerkzeuges ist. Der Abstandhalter ist elastisch verformbar. Der Abstandhalter ist in einem zweiten Zustand derart elastisch verformt, dass der maximale Abstand des Kontaktbereiches höchstens so groß ist wie der Schnittradius, und dass Abstandhalter vollständig außerhalb der Schnittebene des Schneidwerkzeuges angeordnet ist.

Der Abstandhalter des erfindungsgemäßen tragbaren Arbeitsgerätes ermöglicht in seinem ersten Zustand die Einhaltung eines Sicherheitsabstandes zwischen dem Schneidwerkzeug und einem Hindernis, welches beispielsweise von einem Bediener des Arbeitsgerätes zu ummähen ist. Möchte der Bediener den Sicherheitsabstand überbrücken, kann dieser das Arbeitsgerät mit dem Abstandhalter derart gegen das Hindernis drücken, dass sich der Abstandhalter elastisch verformt und das Schneidwerkzeug bis an das Hindernis heranreicht. Somit ist in dem zweiten Zustand des Abstandhalters sämtliches Schnittgut für das Schneidwerkzeug zugänglich und kann durch dieses geschnitten werden. Ist der Abstandhalter elastisch verformt, ist ein Kontakt zwischen dem Schneidwerkzeug und dem Hindernis nicht ausgeschlossen. Ein solcher Kontakt zwischen Schneidwerkzeug und Hindernis wird bewusst durch den Benutzer verursacht, da die elastische Verformung des Abstandhalters gezielt durch den Benutzer gegen einen spürbaren mechanischen Widerstand eingeleitet werden muss. Somit kann der Benutzer auf den Anwendungsfall bezogen entscheiden, ob er mit dem montierten Schneidwerkzeug das zu ummähende Hindernis kontaktiert oder einen Abstand einhalten möchte. Übt der Bediener anschließend keinen Druck auf den Abstandhalter aus, formt sich dieser zurück in seinen Ausgangszustand, nämlich in den ersten unverformten Zustand. Ist das Schneidwerkzeug bereits verschleißt, kann die reduzierte Reichweite des Schneidwerkzeuges durch die elastische Verformung des Abstandhalters kompensiert werden.

Vorzugsweise entspricht eine maximale elastische Verformung des Abstandhalters mindestens 5% des maximalen Abstandes des Kontaktbereiches zur Drehachse. Dadurch kann eine erhöhte Zugänglichkeit des Schneidwerkzeuges gewährleistet werden.

Es ist vorzugsweise vorgesehen, dass der Abstandhalter einen Träger und ein am Träger befestigtes Endstück umfasst, wobei der Kontaktbereich des Abstandhalters am Endstück ausgebildet ist. Bevorzugt ist der Träger starr und das Endstück elastisch verformbar. Vorteilhaft bestehen der Träger und das Endstück aus verschiedenen Werkstoffen. Dadurch ist die elastische Verformbarkeit des Abstandhalters auf einfache Weise gezielt einstellbar. Es ist vorteilhaft vorgesehen, dass das Endstück aus einem Elastomer besteht. Dadurch sind das Endstück und damit auch der Abstandhalter elastisch verformbar. Zudem ermöglicht die Ausbildung des Endstückes aus einem Elastomer einen schonenden Kontakt mit möglichen Hindernissen. Alternativ kann die elastische Verformbarkeit nicht durch die Werkstoffwahl, sondern durch die Geometrie des Endstückes erzeugt werden. Hierbei ist die Geometrie des Endstückes derart auszulegen, dass das Endstück eine Nachgiebigkeit in Belastungsrichtung aufweist. Selbstverständlich kann in einer vorteilhaften Ausbildung der Abstandhalter, insbesondere das Endstück, mit einem elastisch verformbaren Werkstoff, beispielsweise einen Elastomer, versehen sein und zugleich eine geometrische Struktur aufweisen, die eine entsprechende Nachgiebigkeit begünstigt.

Das Endstück ist am Träger vorzugsweise austauschbar. Im Betrieb des tragbaren Arbeitsgerätes kann nach einigen Betriebsstunden das Endstück durch den häufigen Kontakt mit Hindernissen verschleißen oder sogar beschädigt werden. In solchen Fällen ist es kostensparend, lediglich das Endstück austauschen zu können, ohne dabei den Träger oder den gesamten Abstandhalter wechseln zu müssen. Das Endstück ist vorzugsweise über eine Rastverbindung an dem Träger gehalten. Somit kann der Austausch des Endstückes an dem Träger auf einfache Art und Weise erfolgen. Die Austauschbarkeit des Endstückes ermöglicht auch den Einsatz verschiedener Endstücke. Diese können sich beispielsweise in ihrer Form und ihrem Werkstoff unterscheiden. Demnach können die Endstücke auch verschiedene Nachgiebigkeiten aufweisen. Dies ermöglicht den Einsatz eines spezifischen, auf das entsprechende Schneidwerkzeug abgestellten Endstückes.

Es ist vorteilhaft vorgesehen, dass das Endstück aus einem Ring und einem daran angeordneten Fortsatz zur Befestigung an dem Träger gebildet ist. Der Ring kann gestaucht werden. Ist der Fortsatz entsprechend elastisch ausgebildet, kann dieser bei der Verformung des Ringes ebenfalls mit verformt werden. In dieser Ausführung wird die elastische Verformbarkeit des Endstückes durch die geometrische Struktur begünstigt. Die Wandstärke des Rings nimmt vorzugsweise mit zunehmendem radialem Abstand zur Drehachse der Abtriebswelle ab. Somit ist die geringste Wandstärke vorzugsweise an der Kontaktzone des Abstandhalters vorgesehen. In dieser vorteilhaften Ausführung ist die Nachgiebigkeit in der Kontaktzone des Abstandhalters besonders hoch, wodurch der Bediener das Endstück des Abstandhalters kontrolliert eindrücken kann. Das kontrollierte Eindrücken ist von besonderer Bedeutung, da somit ein ungewolltes Überdrücken des Abstandhalters und infolge ein erhöhter Verschleiß des Schneidwerkzeuges vermieden werden kann.

Am vorderen Gehäuse sind vorzugsweise mehrere Abstandhalter vorgesehen. Die Abstandhalter sind insbesondere fingerartig ausgebildet. Es ist vorzugsweise vorgesehen, dass sich die Abstandhalter in eine Längsrichtung erstrecken, wobei jeder Abstandhalter radial zur Drehachse der Abtriebswelle angeordnet ist. Die fingerartige Ausgestaltung sowie die radiale Anordnung der Abstandhalter begünstigen die Zuführung des zu mähenden Schnittgutes. Wird der Mähkopf sowie der Abstandhalter über den Boden geführt, schiebt sich das Schnittgut zwischen die Finger. Ein Niederdrücken des Schnittgutes kann vermieden werden. Es kann in einer alternativen Ausführung auch vorgesehen sein, dass das Endstück in Form eines Bügels ausgebildet ist.

Bevorzugt ist an dem vorderen Gehäuse eine Aufnahmevorrichtung vorgesehen, wobei der Abstandhalter lösbar an der Aufnahmevorrichtung gehalten ist. Der Abstandhalter ist vorzugsweise austauschbar an der Aufnahmevorrichtung gehalten. Dadurch kann je nach Anwendungsfall ein spezifischer Abstandhalter vorgesehen werden. Die Abstandhalter können sich beispielsweise in ihrer Form und in ihrem Werkstoff unterscheiden. So können auch Abstandhalter mit verschiedenen Nachgiebigkeiten, beispielsweise für verschiedene Schneidwerkzeuge, vorgesehen sein. Es kann auch zweckmäßig sein, Abstandhalter mit verschiedenen Geometrien vorzusehen, die beispielsweise an das Schnittgut angepasst sind.

Der Abstandhalter ist vorzugsweise schwenkbar an dem vorderen Gehäuse gehalten. Somit kann der Abstandhalter je nach Bedarf durch den Benutzer in eine Betriebsstellung oder in eine Außerbetriebsstellung geschwenkt werden.

Es ist vorteilhaft vorgesehen, dass das Endstück an dem Träger an einem Verbindungsabschnitt gehalten ist, wobei der Verbindungsabschnitt einen radial zur Drehachse der Abtriebswelle gemessenen Abstand zur Drehachse aufweist, wobei der Abstand mindestens 33%, vorzugsweise mindestens 50%, insbesondere mindestens 66% des maximalen Abstands des Kontaktbereiches zur Drehachse beträgt.

Weitere Merkmale der Erfindung ergeben sich aus der Beschreibung und der Zeichnung, in der mehrere nachfolgend im Einzelnen beschriebene Ausführungsbeispiele der Erfindung dargestellt sind. Es zeigen:
- Fig. 1: eine schematische Darstellung eines von einem Bediener gehaltenen Freischneiders,
- Fig. 2: eine perspektive Darstellung eines vorderen Gehäuses eines Freischneiders mit Abstandhalter,
- Fig. 3: eine Draufsicht des vorderen Gehäuses nach Fig. 2,
- Fig. 4: eine Seitenansicht des vorderen Gehäuses nach Fig. 2,
- Fig. 5: eine Seitenansicht des vorderen Gehäuses nach Fig. 2 ohne Abstandhalter,
- Fig. 6: eine perspektivische Darstellung eines Abstandhalters nach Fig. 2,
- Fig. 7: eine Vorderansicht des vorderen Gehäuses nach Fig. 2 mit einem in eine Außerbetriebsstellung geschwenkten Abstandhalter,
- Fig. 8: eine perspektivische Seitenansicht eines Endstückes des Abstandhalters nach Fig. 2,
- Fig. 9: eine Ansicht von unten des Endstückes nach Fig. 8,
- Fig. 10: eine schematische, perspektivische ausschnittsweise Darstellung eines Trägers eines Abstandhalters,
- Fig. 11: eine schematische Draufsicht eines alternativen, erfindungsgemäßen Abstandhalters mit Bügel,
- Fig. 12: eine schematische Draufsicht eines alternativen, erfindungsgemäßen Abstandhalters mit Bügel und erweitertem Träger und
- Fig. 13: eine schematische Draufsicht eines alternativen, erfindungsgemäßen Abstandhalters mit Federelement.

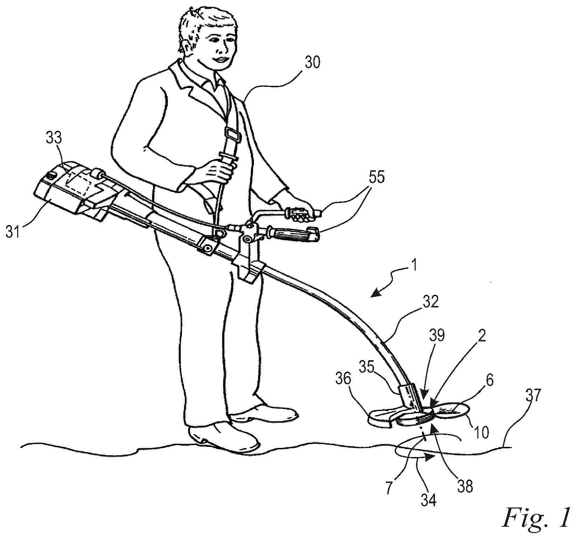

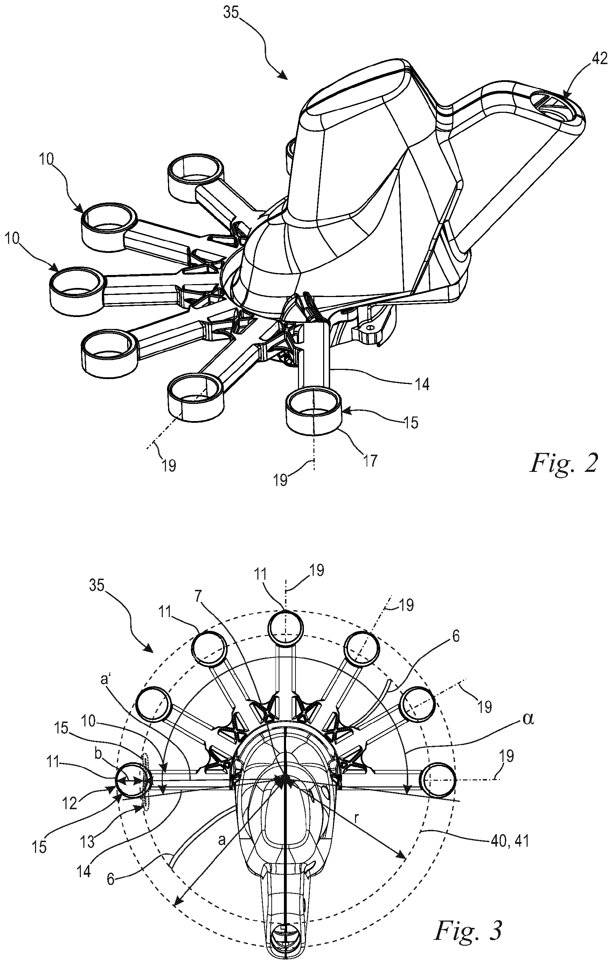

Fig. 1 zeigt in einer schematischen Darstellung ein tragbares Arbeitsgerät - nachfolgend als Arbeitsgerät bezeichnet. Unter dem Begriff "tragbares Arbeitsgerät" ist ein Arbeitsgerät zu verstehen, dass derart ausgelegt ist, dass es in Betrieb vom Bediener zu tragen und von Hand zu führen ist. Das Arbeitsgerät ist vorliegend als Freischneider ausgebildet ist. Das Arbeitsgerät 1 wird von einem Bediener 30 gehalten. Das Arbeitsgerät 1 besitzt ein hinteres Ende mit einem hinteren Gehäuse 31 und ein vorderes Ende, aus dem eine Abtriebswelle 3 ragt. Ein Schaft 32 verbindet das hintere Ende und das vordere Ende. Im Schaft 32 sind Handgriffe 55 zum Führen des Arbeitsgerätes 1 angeordnet. An das vordere Ende des Arbeitsgerätes 1 schließt ein Mähkopf 2 an. Der Mähkopf 2 ist an der Abtriebswelle 3 befestigt und wird rotierend um eine Drehachse 7 von einem lediglich schematisch angedeuteten Antriebsmotor 33 in eine Arbeitsdrehrichtung 34 angetrieben. Der Antriebsmotor 33 ist im hinteren Gehäuse 31 angeordnet, wobei im Schaft 32 eine Abtriebswelle verläuft. Es kann vorgesehen sein, dass die Abtriebswelle im Schaft unmittelbar mit der Abtriebswelle 3 für den Mähkopf 2 verbunden ist, demnach kein Getriebe zwischengeschaltet ist. In einer alternativen nicht dargestellten Ausführung kann der Antriebsmotor 33, der insbesondere ein Elektromotor ist, auch an einem vorderen Gehäuse (Fig. 2), das am vorderen Ende angeordnet ist, angeordnet sein. Vorteilhaft befindet sich im vorderen Gehäuse 35 auch ein Getriebe des Mähkopfs 2. Der Mähkopf 2 ist an der im Betrieb dem Bediener 30 zugewandten Seite von einer Schutzhaube 36 abgedeckt. Der Mähkopf 2 besitzt mindestens ein Schneidwerkzeug 6, das im Ausführungsbeispiel als ein Schneidfaden zum Schneiden von Schnittgut wie Gras, Gestrüpp oder dgl. dient. Am Mähkopf 2 ist eine im Betrieb dem Boden 37 zugewandte Unterseite 38 ausgebildet, die an der dem Schaft 32 abgewandten Seite des Mähkopfes 2 angeordnet ist. An der dem Schaft 32 zugewandten Seite des Mähkopfes 2 ist die Oberseite 39 des Mähkopfes 2 ausgebildet. Die vom Bediener 30 zwingend zu tragende Schutzkleidung für den Betrieb des Freischneiders 1 ist in der vereinfachten Darstellung nicht gezeigt.

In Fig. 2 ist das vordere Gehäuse 35 des erfindungsgemäßen Arbeitsgerätes 1 gezeigt, wobei in der gezeigten Ausführung der nicht näher dargestellte Antriebsmotor 33 in dem vorderen Gehäuse 35 vorgesehen ist. Das vordere Gehäuse 35 umfasst eine Aufnahme 42, die zur Anbindung des Schaftes 32 dient. Die Aufnahme 42 ist als eine Öffnung in dem vorderen Gehäuse 35 ausgebildet. In montiertem Zustand des Arbeitsgerätes 1 ragt der Schaft 32 in die Öffnung, wobei das vordere Gehäuse 35 an dem Schaft 32 geklemmt, geschraubt oder in ähnlicher Weise gehalten ist. Das vordere Gehäuse 35 ist vorzugsweise aus zwei Gehäusehälften gebildet.

Wie in Fig. 2 gezeigt, ist an dem vorderen Gehäuse 35 mindestens ein Abstandhalter 10 vorgesehen. Im bevorzugten Ausführungsbeispiel sind sieben Abstandhalter 10 an dem vorderen Gehäuse 35 angeordnet. Es kann auch zweckmäßig sein, eine andere Anzahl Abstandhalter 10 vorzusehen. Der Abstandhalter 10 umfasst einen Träger 14 und ein Endstück 15. Über den Träger 14 ist das Endstück 15 an dem vorderen Gehäuse 35 gehalten. Das Endstück 15 ist an dem Träger 14 über einen Verbindungsabschnitt 59 gehalten. An dem Abstandhalter 10 ist ein Kontaktbereich 11 vorgesehen. Der Kontaktbereich 11 ist der Bereich des Abstandhalters 10, der im Betrieb des Arbeitsgerätes 1 zum Kontaktieren von Hindernissen vorgesehen ist. Der Kontaktbereich 11 ist an dem Endstück 15 des Abstandhalters 10 vorgesehen.

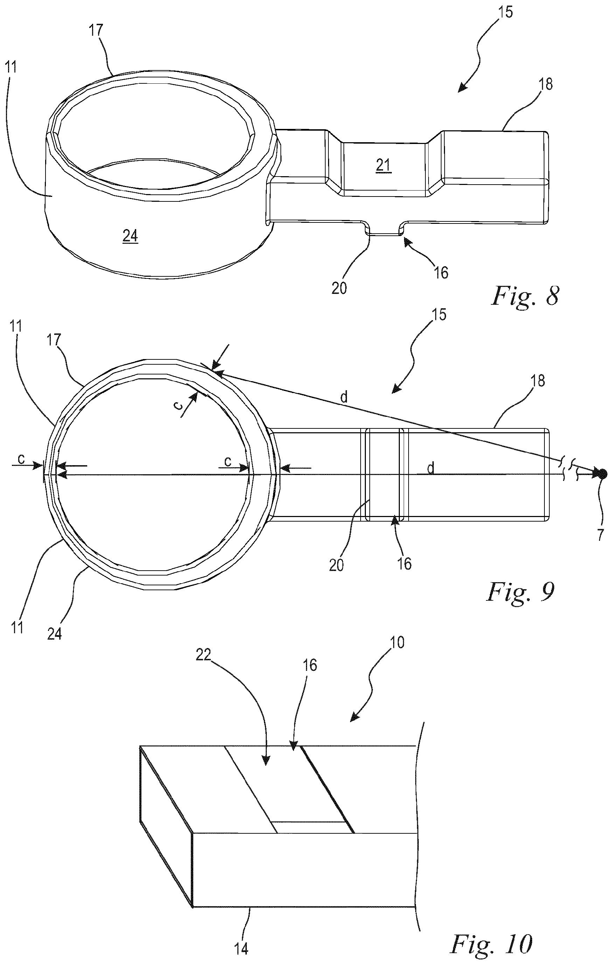

Wie in den Figuren 8 und 9 gezeigt, ist das Endstück 15 aus einem Fortsatz 18 und einen an den Fortsatz 18 anschließenden Ring 17 gebildet. Der Fortsatz 18 und der Ring 17 sind vorzugsweise einteilig ausgebildet. Der Fortsatz 18 weist ein im Wesentlichen rechteckiges Profil auf. An einer Seite, des Fortsatzes 18 ist im Ausführungsbeispiel eine Erhebung 20 ausgebildet. Auf der der Erhebung 20 gegenüberliegenden Seite des Fortsatzes 18 ist eine Vertiefung 21 ausgebildet. Durch die Vertiefung 21 des Endstückes 15 ist das Endstück 21 im Bereich der Erhebung 20 in Richtung zur Vertiefung elastisch verformbar. Zur Befestigung des Endstückes 15 des Abstandhalters 10 ist dieses an einem freien Ende 23 des Trägers 14 in den Träger 14 einzuschieben. Der Träger 14 entspricht an seinem freien Ende 23 einem Hohlprofil zur Aufnahme des Endstückes 15. Beim Einschieben des Endstückes 15 in den Träger 14 wird die Erhebung 20 des Endstückes 15 in Richtung zur Vertiefung 21 des Endstückes 15 gedrückt. Das Endstück 15 ist in diesen Zustand im Bereich der Erhebung vorgespannt. Das Endstück 15 ist dabei soweit in den Träger 14 zu schieben, bis die Erhebung 20 des Endstückes in eine Rastöffnung 22 (Fig. 10) des Trägers 14 einrastet. In eingerastetem Zustand ist das Endstück wieder entlastet. Zum Lösen des Endstückes 15 aus dem Träger 14 ist die Erhebung 20 einzudrücken und das Endstück 15 aus dem Träger 14 zu ziehen. Das Endstück 15 ist folglich an dem Träger 14 über eine Rastverbindung 16 gehalten. Die Rastverbindung 16 ist lösbar. Die Rastverbindung 16 ist durch die Erhebung 20 des Endstückes 15 und durch die Rastöffnung 22 des Trägers 14 gebildet. Somit ist ein einfacher Austausch des Endstückes 15 ermöglicht.

Wie in den Figuren 8 und 9 gezeigt, ist der Ring 17 in etwa kreisrund. In einer alternativen Ausführung des Arbeitsgerätes 1 kann es zweckmäßig sein, anstelle eines Ringes 17 eine anders geformte Kontur vorzusehen. Die Kontur kann geschlossen sein, es sind jedoch auch offene Konturen, beispielsweise eine C-Kontur denkbar. Der Ring 17 weist eine Wandstärke c auf. Die Wandstärke c kann entlang des Ringumfangs 24 verschieden ausgebildet sein. Wie in Fig. 9 gezeigt, nimmt die Wandstärke c des Rings 17 mit zunehmendem radialen Abstand d zur Drehachse 7 der Abtriebswelle 3 ab. Im bevorzugten Ausführungsbeispiel nimmt die Wandstärke c des Rings 17 kontinuierlich ab. Es kann in einer alternativen Ausführungsform hingegen auch zweckmäßig sein, eine sprunghafte Änderung der Wandstärke c vorzusehen. Wie in den Figuren 8 und 9 gezeigt, ist der Kontaktbereich 11 an dem Ring 17 vorgesehen. Kontaktiert das Arbeitsgerät 1 über den Kontaktbereich 11 des Abstandhalters 10 ein feststehendes Hindernis, verformt sich der Ring 17 elastisch. Durch die minimale Wandstärke c des Rings 17 am bezüglich der Drehachse 7 äußersten Bereich des Ringes 17 ist die anfänglich aufzubringende Kraft, die zur Verformung des Endstückes 15 notwendig ist, sehr gering. Möchte der Bediener 30 des Arbeitsgerätes 1 das Endstück 15 des Abstandhalters 10 weiter verformen, muss dieser eine immer größer werdende Kraft aufbringen. Mit zunehmender Wandstärke c des Rings 17 erhöht sich also auch der Verformungswiderstand, der durch den Bediener 30 überwunden werden muss. Auf diese Weise können größere, unbeabsichtigte Verformungen des Abstandhalters 10 und somit auch unerwünschte Schäden durch eine Kollision mit dem Hindernis am Schneidwerkzeug 6 vermieden werden.

In der bevorzugten Ausführungsform ist das Endstück 15 auf einem elastisch verformbaren Werkstoff ausgebildet, insbesondere aus einem Elastomer. Der Träger 14 hingegen ist aus einem starren Werkstoff, insbesondere aus einem Duroplast oder einem Thermoplast, gebildet. Alternativ kann der Träger 14 auch aus einem Metallwerkstoff gebildet sein. In besonders bevorzugter Ausführung des Arbeitsgerätes 1 weist der Werkstoff des Endstückes 15 ein geringeres E-Modul auf als der Werkstoff des Trägers 14. In einer weiteren Ausführung des Arbeitsgerätes 1 kann es hingegen auch vorgesehen sein, dass das Endstück 15 selbst aus mehreren Werkstoffen gebildet ist, wobei zumindest ein Werkstoff ein geringeres E-Modul aufweist als der Träger 14. Bei der Ausbildung des Endstückes 15 und des Trägers 14 ist es unter anderem wesentlich, dass das Endstück 15 im Gegensatz zu dem Träger 14 elastisch verformbar ausgebildet ist.

Die elastische Verformbarkeit kann durch die Geometrie des Endstückes 15 und/oder durch die geeignete Wahl des Werkstoffes gebildet werden.

Wie in den Figuren 2, 3, 4 und 6 gezeigt, sind an dem vorderen Gehäuse 35 mehrere, im vorliegenden Ausführungsbeispiel sieben, Abstandhalter 10, vorgesehen. Die Abstandhalter 10 erstrecken sich fingerartig ausgehend von der Drehachse 7 der Abtriebswelle 3 radial nach außen. Die Abstandhalter 10 erstrecken sich jeweils in eine Längsrichtung 19, wobei die Abstandhalter 10 derart gegenüber dem vorderen Gehäuse 35 angeordnet sind, dass die Längsrichtung 19 eines jeden Abstandhalters 10 vorzugsweise in etwa radial zur Drehachse 7 der Abtriebswelle 3 ausgerichtet ist. Wie in Fig. 3 gezeigt, sind die Abstandhalter 10 in gleichen Winkelabständen zueinander angeordnet. Die Abstandhalter 10 bilden eine Wirkzone 25, in der das Schneidwerkzeug des Arbeitsgerätes 1 gegenüber Hindernissen durch die Abstandhalter 10 auf Abstand gehalten werden kann. Diese Wirkzone erstreckt im vorliegenden Ausführungsbeispiel um die Drehachse 7 über sämtliche Abstandhalter 10. Dabei erstreckt sich die Wirkzone 25 bezüglich der Drehachse 7 der Abtriebswelle 3 um einen Winkelabschnitt a, wobei der Winkelabschnitt α mindestens 90°, insbesondere mindestens 120°, vorzugsweise mindestens 160° beträgt.

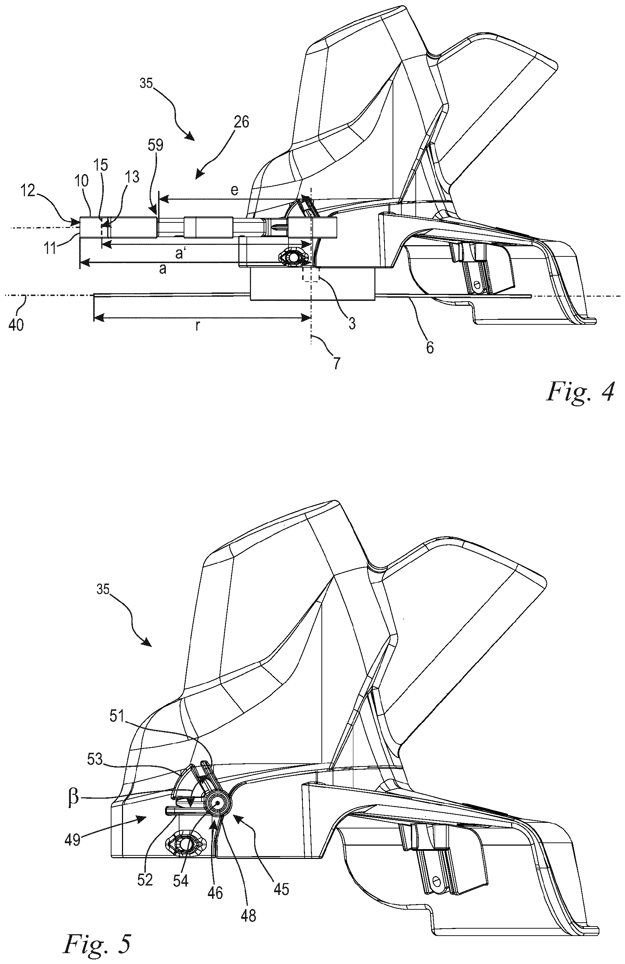

Wie in den Figuren 3 und 4 gezeigt, spannt das Schneidwerkzeug 6 um die Drehachse 7 der Abtriebswelle 3 gedreht eine Schnittebene 40 auf. Demnach dreht sich das Schneidwerkzeug 6 in der Schnittebene 40. Das Schneidwerkzeug 6 umfasst im gezeigten Ausführungsbeispiel zwei freie Enden 43, die in Ihrer Drehung um die Drehachse 7 einen Schnittkreis 41 bilden, der in der Schnittebene 40 liegt. Der Schnittkreis 41 weist einen Schnittradius r auf. Der Kontaktbereich 11 eines Abstandhalters 10 weist in seinem ersten, unverformten Zustand 12 einen maximalen Abstand a zur Drehachse 7 der Abtriebswelle 3 auf. In diesem ersten, unverformten Zustand 12 steht der Abstandhalter 10 nicht mit einem Hindernis in Kontakt. Der maximale Abstand a in erstem, unverformtem Zustand 12 des Abstandhalters 10 ist größer als der Schnittradius r des Schneidwerkzeuges 6. Wird der Abstandhalter 10 an seinem Kontaktbereich 11 eingedrückt, so befindet sich der Abstandhalter 10 in seinem zweiten, verformten Zustand 13. Das verformte Endstück 15 ist in den Figuren 3 und 4 jeweils strichliert, schematisch dargestellt. In diesem Zustand ist der maximale Abstand a' des elastisch verformten Abstandhalters höchstens so groß wie der Schnittradius r des Schneidwerkzeuges 6. Dadurch kann beim Mähen in Bereichen von Randsteinen der Abstandhalter 10 derart verformt werden, so dass das Schneidwerkzeug 6 das Hindernis bzw. den Randstein kontaktiert und sämtliches Schnittgut geschnitten werden kann. Selbstverständlich unterliegt das Schneidwerkzeug 6 einem gewissen Verschleiß. Ist der Schnittradius r kleiner als der maximale Abstand a' des elastisch verformten Abstandhalters 10, muss das Werkzeug nachgestellt werden, um ein Schneiden radial außerhalb des maximalen Abstands a' des verformten Abstandhalters 10 zu ermöglichen. Vorzugsweise ist der Schnittradius r mindestens so groß wie der maximale Abstand a' des elastisch verformten Abstandhalters 10 und höchstens so groß wie der maximale Abstand a des elastisch unverformten Abstandhalters 10. In diesem Bereich ist es wie anfangs erwähnt möglich, den Verschleiß des Schneidwerkzeuges 6 durch die elastische Verformung des Abstandhalters zu kompensieren, ohne das Schneidwerkzeug 6 wechseln oder nachstellen zu müssen. Bei der elastischen Verformung des Abstandhalters 10 liegt dieser vollständig außerhalb der Schnittebene 40, da andernfalls der Abstandhalter 10 mit dem Schneidwerkzeug kollidieren würde. Wie in Fig. 3 gezeigt, weist der Abstandhalter 10 eine radial zur Drehachse 7 gemessene maximale elastische Verformung b auf. Die maximale elastische Verformung b des Abstandhalters 10 entspricht mindestens 5%, insbesondere mindestens 10%, vorzugsweise in etwa 15% des maximalen Abstandes a zwischen Kontaktbereich 11 und Drehachse 7 in erstem, unverformtem Zustand 12 des Abstandhalters 10. Die maximale elastische Verformung b des Abstandhalters 10 entspricht höchstens 40%, insbesondere höchstens 25% des maximalen Abstandes a zwischen Kontaktbereich 11 und Drehachse 7 in erstem, unverformtem Zustand 12 des Abstandhalters 10. Der Verbindungsabschnitt 59 weist einen radial zur Drehachse 7 der Abtriebswelle 3 gemessenen Abstand e zur Drehachse 7 auf. Dieser Abstand e beträgt mindestens 33%, vorzugsweise mindestens 50%, insbesondere mindestens 66% des maximalen Abstands a des Kontaktbereiches 11 zur Drehachse 7. Der Träger 15 erstreckt sich vorzugsweise über einen größeren radial zur Drehachse 7 gemessenen Abschnitt als das Endstück 15.

Wie in den Figuren 5 bis 7 gezeigt, sind die Abstandhalter 10 über eine Aufnahmevorrichtung 45 an dem vorderen Gehäuse 35 des Arbeitsgerätes 1 schwenkbar gehalten. Die Aufnahmevorrichtung 45 sieht für den Abstandhalter 10 zwei Stellungen vor, nämlich eine Betriebsstellung 26 und eine Außerbetriebsstellung 27. In der Betriebsstellung 26 ist der Abstandhalter 10 derart ausgerichtet, dass die Längsrichtung 19 des Abstandhalters 10 in etwa parallel zur Schnittebene 40 verläuft. In der Betriebsstellung 26 des Abstandhalters 10 ist der maximale Abstand a in erster, unverformter Stellung 12 zwischen dem Kontaktbereich 11 des Abstandhalters 10 und der Drehachse 7 der Abtriebswelle 3 größer als der Schnittradius r des Schneidwerkzeuges 6. In der Außerbetriebsstellung 27 des Abstandhalters 10 ist der Abstandhalter 10 in Richtung von der Unterseite 38 zur Oberseite 39 geschwenkt, wodurch der maximale Abstand a in erster, unverformter Stellung 12 zwischen dem Kontaktbereich 11 des Abstandhalters 10 und der Drehachse 7 der Abtriebswelle 3 kleiner als der Schnittradius r des Schneidwerkzeuges 6 ist. Demnach ist die Funktion des Abstandhalters 10, nämlich das Schneidwerkzeug 6 gegenüber Hindernissen auf Abstand zu halten, in seiner Außerbetriebsstellung 27 aufgehoben. Ausgenommen hiervon sind lediglich die Abstandhalter 10, deren Längsachse in etwa in der Schwenkachse 54 liegen.

Wie in den Figuren 5 bis 7 gezeigt, ist die Aufnahmevorrichtung 45 aus einer Lagerung 46 und einer Arretiervorrichtung 49 gebildet. Die Lagerung 46 ist aus einem Lagerzapfen 47, der im Ausführungsbeispiel an dem Abstandhalter 10 ausgebildet ist, und eine an dem vorderen Gehäuse 35 ausgebildete Lageröffnung 48 zur Aufnahme des Lagerzapfens 47 gebildet. Selbstverständlich sind zwei Lagerungen 46 auf gegenüberliegenden Seiten des vorderen Gehäuses 36 vorgesehen, wobei beide Lagerungen 46 eine gemeinsame Schwenkachse 54 besitzen.

Die Arretiervorrichtung 49 umfasst ein Rastelement 50, welches als Rippe an dem Abstandhalter 10 ausgebildet ist. An dem vorderen Gehäuse 35 ist ein oberes Anschlagelement 51, ein unteres Anschlagelement 52 und ein zwischen den beiden Anschlagelementen angeordnetes Gegenelement 53 angeordnet. Das Gegenelement 53 ist gegenüber den beiden Anschlagelementen 51, 52 beabstandet angeordnet. Das Gegenelement 53 ist als Erhebung auf dem vorderen Gehäuse 35 ausgebildet. In der Betriebsstellung 26 des Abstandhalters 10 ist das Rastelement 50 zwischen dem unteren Anschlagelement 51 und dem Gegenelement 53 arretiert. Zum Schwenken von der Betriebsstellung 26 in die Außerbetriebsstellung 27 ist der Abstandhalter 10 um die Schwenkachse 54 der Lagerungen 46 nach oben zu drücken. Dabei ist das Widerstandsmoment, welches sich aus dem Kontakt zwischen dem Rastelement 50 des Abstandhalters 10 und dem Gegenelement 53 des vorderen Gehäuses 35 ergibt, zu überwinden. Der Abstandhalter 10 ist bis zum Anschlag des Rastelementes 50 an das obere Anschlagelement 51 zu schwenken. Dabei rastet das Rastelementes 50 zwischen dem Gegenelement 53 und dem oberen Anschlagelement 51 ein und ist in der Außerbetriebsstellung 27 gehalten. Auch die Arretiervorrichtung 49 ist vorzugsweise an zwei gegenüberliegenden Seiten des vorderen Gehäuses 35 ausgebildet. Das obere Anschlagelement 51 und das untere Anschlagelement 52 weisen bezüglich der Schwenkachse 54 einen Winkelabstand β von vorzugsweise in etwa 60° auf.

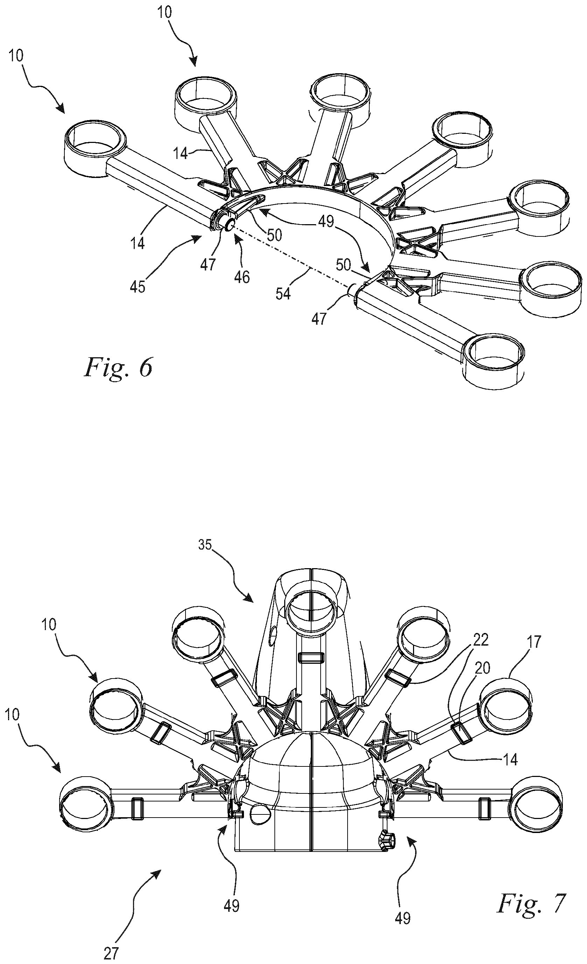

Wie insbesondere in Fig. 6 gezeigt, sind in dem bevorzugten Ausführungsbeispiel die Träger 14 der Abstandhalter 10 einteilig ausgebildet.

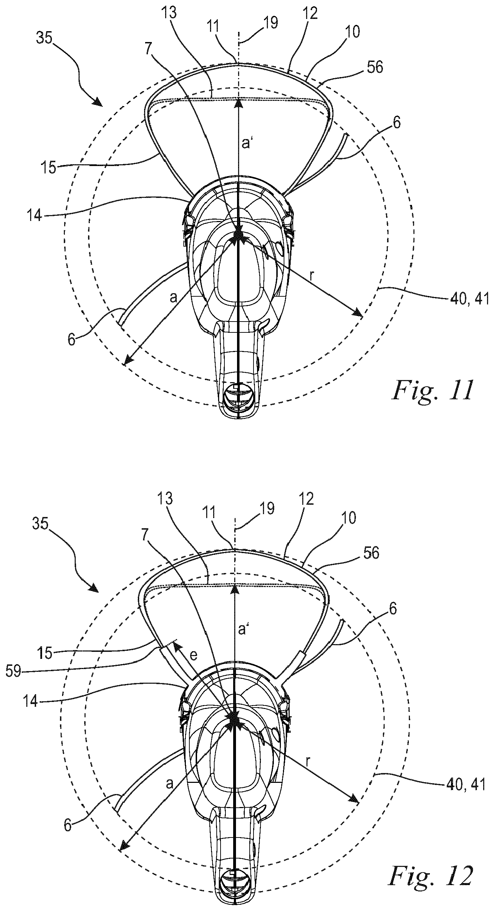

In Fig. 11 ist ein weiteres erfindungsgemäßes Ausführungsbeispiel eines Arbeitsgerätes 1 mit einem Abstandhalter 10 gezeigt. Das Arbeitsgerät 1 umfasst lediglich einen einzigen Abstandhalter 10, der ebenfalls aus einem Träger 14 und einem Endstück 15 besteht. Das Endstück 15 ist als ein elastisch, verformbarer Bügel 56 ausgebildet. Der Bügel 56 des Abstandhalters 10 ist aus einem verformbaren Werkstoff gebildet. Der in Fig. 11 gezeigte Abstandhalter 10 weist dieselben Verformungseigenschaften wie die oben beschriebenen Ausführungsbeispiele auf. Die strichlierte Darstellung des Bügels 56 zeigt den Bügel in seiner zweiten, verformten Stellung 13, in der der maximale Abstand a' kleiner als der Schnittradius r des Schneidwerkzeuges 6 ist. In der ersten, unverformten Stellung 12 des Bügels 56 ist der maximale Abstand a größer als der Schnittradius r des Schneidwerkzeuges. In einer weiteren alternativen Ausführung kann es zweckmäßig sein, den Bügel 56 auch in einer anderen Form auszubilden. Es kann auch zweckmäßig sein, den Querschnitt des Bügels 56 zur gezielten Einstellung eines Widerstandmomentes entlang des Bügels 56 verschieden auszubilden. Ferner kann auch der Winkelabschnitt a, um den sich der Bügel 56 bezüglich der Drehachse 7 der Abtriebswelle 6 erstreckt, angepasst werden.

In Fig. 12 ist ein weiteres erfindungsgemäßes Ausführungsbeispiel eines Arbeitsgerätes 1 mit einem Abstandhalter 10 gezeigt. Diese Ausführungsform unterscheidet sich gegenüber dem Arbeitsgerät nach Anspruch 11 lediglich in der Ausbildung des Abstandhalters 10. Dieser erstreckt sich bezogen auf die Drehachse 7 deutlich weiter nach radial außen. Das Endstück 15 ist an dem Träger 14 an dem Verbindungsabschnitt 59, vorzugsweise austauschbar, gehalten (siehe auch Fig. 4).

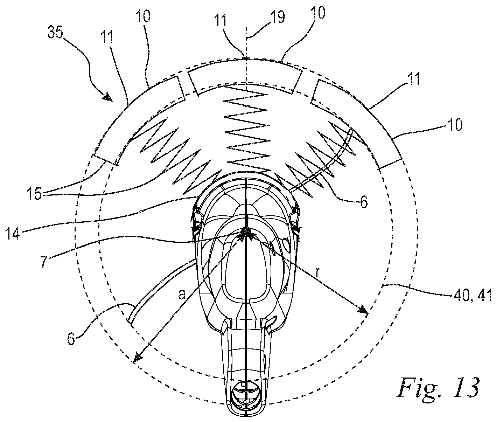

In Fig. 13 ist ein weiteres erfindungsgemäßes Ausführungsbeispiel des Arbeitsgerätes 1 gezeigt, in welchem das Endstück 15 des Abstandhalters 10 aus einem Kontaktelement 57 und einem elastisch, verformbaren Federelement 58 besteht. Das Kontaktelement 57 ist über das Federelement 58 an dem Träger 14 gehalten. Somit liegt das Kontaktelement 57 bezüglich der Drehachse 7 radial außerhalb des Federelementes 58. An dem Kontaktelement 57 ist der Kontaktbereich 11 ausgebildet, der zum Anschlagen an etwaige Hindernisse vorgesehen ist. Das Kontaktelement 57 ist im vorliegenden Ausführungsbeispiel als starres Element ausgebildet. Es kann jedoch auch zweckmäßig sein, das Kontaktelement 57 ebenfalls als ein elastisch verformbares Element vorzusehen. Die elastische Hauptverformung in die zweite, verformte Stellung 13 des Abstandhalters wird jedoch durch das Federelement 58 bewirkt. Wie in Fig. 12 gezeigt sind drei Abstandhalter 10 vorgesehen, wobei deren Träger 14 als gemeinsamer Träger 14 einteilig ausgebildet ist. Auch eine andere Anzahl an Abstandhaltern 10 kann zweckmäßig sein.

## Patentansprüche

1. Tragbares Arbeitsgerät,
umfassend
- ein vorderes Gehäuse (35),
- eine aus dem vorderen Gehäuse (35) ragende Abtriebswelle (3),
- einen mit der Abtriebswelle (3) verbundenen Grundkörper (4) und
- ein an dem Grundkörper (4) angeordnetes Schneidwerkzeug (6), wobei der Grundkörper (4) mit dem Schneidwerkzeug (6) über einen Antriebsmotor (33) um eine Drehachse (7) der Abtriebswelle (3) drehend antreibbar ist,
wobei das Schneidwerkzeug (6) in einer Schnittebene (40) um die Drehachse (7) rotierend einen Schnittkreis (41) mit einem Schnittradius (r) aufweist,
- einen an dem vorderen Gehäuse (35) angeordneten Abstandhalter (10) mit einem Kontaktbereich (11),
wobei der Kontaktbereich (11) einen radial zur Drehachse (7) der Abtriebswelle (3) gemessenen maximalen Abstand (a) aufweist, der in einem ersten, unverformten Zustand (12) des Abstandhalters (10) größer als der Schnittradius (r) des Schneidwerkzeuges (6) ist,
**dadurch gekennzeichnet, dass**
- der Abstandhalter (10) elastisch verformbar ist, und
- dass der Abstandhalter (10) in einem zweiten Zustand (13) derart elastisch verformt ist, dass der maximale Abstand (a) des Kontaktbereiches (11) höchstens so groß ist wie der Schnittradius (r) und der Abstandhalter (10) vollständig außerhalb der Schnittebene (40) des Schneidwerkzeuges (6) angeordnet ist.

2. Arbeitsgerät nach Anspruch 1,
**dadurch gekennzeichnet, dass** eine maximale elastische Verformung (b) des Abstandhalters (10) mindestens 5% des maximalen Abstandes (a) des Kontaktbereiches (11) zur Drehachse (7) entspricht.

3. Arbeitsgerät nach Anspruch 1 oder 2,
**dadurch gekennzeichnet, dass** der Abstandhalter (10) einen Träger (14) und ein am Träger (14) befestigtes Endstück (15) umfasst, wobei der Kontaktbereich (11) des Abstandhalters (10) am Endstück (15) ausgebildet ist.

4. Arbeitsgerät nach Anspruch 3,
**dadurch gekennzeichnet, dass** der Träger (14) starr ist und das Endstück (15) elastisch verformbar ist.

5. Arbeitsgerät nach Anspruch 3 oder 4,
**dadurch gekennzeichnet, dass** der Träger (14) und das Endstück (15) aus verschiedenen Werkstoffen bestehen.

6. Arbeitsgerät nach einem der Ansprüche 3 bis 5,
**dadurch gekennzeichnet, dass** das Endstück (15) aus einem Elastomer besteht.

7. Arbeitsgerät nach einem der Ansprüche 3 bis 6,
**dadurch gekennzeichnet, dass** das Endstück (15) am Träger (14) austauschbar ist.

8. Arbeitsgerät nach einem der Ansprüche 3 bis 7,
**dadurch gekennzeichnet, dass** das Endstück (15) über eine Rastverbindung (16) an dem Träger (14) gehalten ist.

9. Arbeitsgerät nach einem der Ansprüche 3 bis 7,
**dadurch gekennzeichnet, dass** das Endstück (15) aus einem Ring (17) und einem daran angeordneten Fortsatz (18) zur Befestigung an dem Träger (14) gebildet ist.

10. Arbeitsgerät nach Anspruch 8,
**dadurch gekennzeichnet, dass** die Wandstärke (c) des Rings (17) mit zunehmendem radialen Abstand zur Drehachse (7) der Abtriebswelle (3) abnimmt.

11. Arbeitsgerät nach einem der Ansprüche 1 bis 10,
**dadurch gekennzeichnet, dass** am vorderen Gehäuse (35) mehrere Abstandhalter (10) vorgesehen sind.

12. Arbeitsgerät nach Anspruch 11,
**dadurch gekennzeichnet, dass** die Abstandhalter (10) fingerartig ausgebildet sind.

13. Arbeitsgerät nach Anspruch 11 oder 12,
**dadurch gekennzeichnet, dass** die Abstandhalter (10) sich in eine Längsrichtung (19) erstrecken, wobei jeder Abstandhalter (10) radial zur Drehachse (7) der Abtriebswelle (3) angeordnet ist.

14. Arbeitsgerät nach einem der Ansprüche 3 bis 8,
**dadurch gekennzeichnet, dass** das Endstück (15) in Form eines Bügels ausgebildet ist.

15. Arbeitsgerät nach einem der Ansprüche 1 bis 14,
**dadurch gekennzeichnet, dass** der Abstandhalter (10) schwenkbar an dem vorderen Gehäuse (35) gehalten ist.

16. Arbeitsgerät nach einem der Ansprüche 1 bis 16,
**dadurch gekennzeichnet, dass** an dem vorderen Gehäuse (35) eine Aufnahmevorrichtung (45) vorgesehen ist, wobei der Abstandhalter (10) lösbar an der Aufnahmevorrichtung (45) gehalten ist.

17. Arbeitsgerät nach einem der Ansprüche 3 bis 15,
**dadurch gekennzeichnet, dass** das Endstück (15) an dem Träger (14) an einem Verbindungsabschnitt (59) gehalten ist, wobei der Verbindungsabschnitt (59) einen radial zur Drehachse (7) der Abtriebswelle (3) gemessenen Abstand (e) zur Drehachse (7) aufweist, wobei der Abstand (e) mindestens 33%, vorzugsweise mindestens 50%, insbesondere mindestens 66% des maximalen Abstands (a) des Kontaktbereiches (11) zur Drehachse (7) beträgt.
